# EUROPEAN PATENT APPLICATION

(11) **EP 3 691 015 A1**
(43) Date of publication of application: **05.08.2020**
(21) Application number: 19305120.8
(22) Date of filing: 01.02.2019
(51) Int. Cl.: H01M 10/052, H01M 10/056, H01M 6/16, H01M 6/22, H01G 9/20, H01G 11/06, H01G 11/54, H01M 10/0568, H01M 10/0569

(54) **ELECTROLYTE**

(71) Applicant: Rhodia Operations, 93300 Aubervilliers (FR)
(72) Inventor: KIM, Han-Seong, Seoul (KR); LEE, Hyun-Cheol, 16689 Gyeongi-do (KR); WON, Ji-Hye, Seoul (KR); HOUGH, Lawrence Alan, Seoul (KR); GUY, Laurent, 69580 Sathonay-Camp (FR)
(74) Representative: Ferri, Isabella

(57) **Abstract**

The present invention provides electrolyte compositions which comprise an organic carbonate-based solvent, silica, at least one ionically conducting salt and optionally additives.

The invention also relates to batteries containing said electrolyte composition. The electrolyte composition according to the present invention improves the safety performance of batteries.

## Description

### Technical Field

The present invention relates to an electrolyte comprising a non-aqueous solvent, silica, at least one ionically conducting salt and additives, which can be used in primary or secondary batteries, in supercapacitors, in electro-chromic displays or in solar cells.

### Background Art

Liquid electrolytes are applied in most commercial batteries. They comprise at least one ionically conducting salt and a non-aqueous solvent. Main advantages of liquid electrolytes are high ionic conductivity and good wetting of the electrode surface. Safety issues, related to the potential leakage of the liquid electrolyte in case of damage to the battery, are however a drawback generally attributed to the use of liquid electrolytes.

The use of gel-like electrolytes has been proposed to address these concerns.

For instance, EP1505680A2, discloses a non-aqueous electrolyte comprising an ionically conducting salt, a non-aqueous, anhydrous solvent and an oxide, such as SiO₂, having an average particle size lower than 5 µm, the oxide being present in the electrolyte in an amount from 20 to 50 vol% (that is, above 44% by weight in the case of SiO₂).

WO2018/041709A1 discloses a solid-liquid electrolyte in the form of a gel which comprises at least one ionically conducting salt, at least one organic carbonate-based solvent, and precipitated silica. The addition of precipitated silica to a liquid electrolyte results in a gel which is stable over time, without the coarsening effect that is encountered when other types of silica are used.

### Summary of invention

It has now been surprisingly discovered that liquid electrolyte compositions containing certain silicas can be conveniently used in the preparation of batteries having high thermal and puncture resistance.

### Brief description of drawings

FIG. 1 shows a schematic illustration of a pouch cell.
FIG. 2 shows the results of electrochemical test (voltage vs time) of pouch cells.

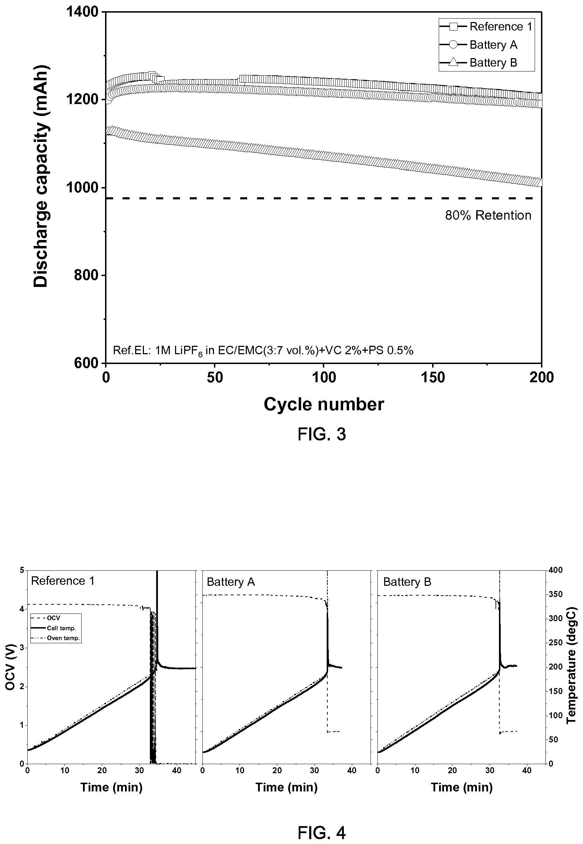

FIG. 3 shows the results of electrochemical test (capacity vs cycle number) of the pouch cells.
FIG. 4 shows the results of thermal exposure test (voltage and cell temperature vs time) of the pouch cells.

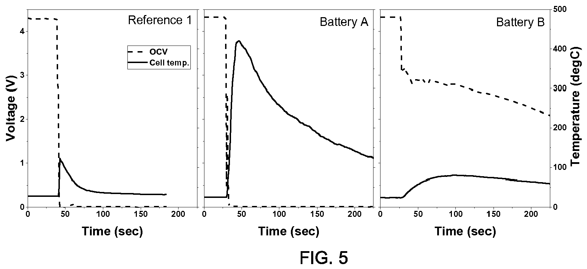

FIG. 5 shows the results of nail penetration test (voltage and cell temperature vs time) of the pouch cells.

### Description of embodiments

A first object of the present invention is an electrolyte composition comprising:
- at least one ionically conducting salt,
- at least one organic carbonate-based solvent, and
- a silica,
characterised in that the composition has a viscosity, at 25°C under a shear rate of 1 s⁻¹, in the range from 0.1 to less than 1000 mPa.s.

The electrolyte composition is liquid.

The viscosity of the electrolyte composition, at 25°C under a shear rate of 1 s⁻¹, is typically at least 0.2 mPa.s, at least 0.5 mPa.s, and even at least 1.0 mPa.s. The viscosity of the electrolyte composition, at 25°C under a shear rate of 1 s⁻¹, is typically at most 980 mPa.s, even at most 950 mPa.s. The composition viscosity may even be at most 900 mPa.s, at most 500 mPa.s and at most 450 mPa.s.

Typical ranges for the electrolyte composition viscosity are for instance from 0.1 to 980 mPa.s, from 0.5 to 950 mPa.s, from 1.0 to 900 mPa.s, even from 1.0 to 450 mPa.s, and .

Suitable ionically conducting salts are selected from the group consisting of:
(a) Mel, Me(PF₆), Me(BF₄), Me(ClO₄), Me-bis(oxalato)borate ("Me(BOB)"), MeCF₃SO₃, Me[N(CF₃SO₂)₂], Me[N(C₂F₅SO₂)₂], Me[N(CF₃SO₂)(R_{F}SO₂)], wherein R_{F} is C₂F₅, C₄F₉ or CF₃OCF₂CF₂, Me(AsF₆), Me[C(CF₃SO₂)₃], Me₂S, Me being Li or Na, and
(b) mixtures thereof.

When the electrolytes hereby concerned are those suitable for lithium-ion cells, the at least one ionically conducting salt is preferably selected from the group consisting of LiPF₆, LiBF₄, LiClO₄, lithium bis(oxalato)borate ("LiBOB"), LiN(SO₂F)₂, LiN(CF₃SO₂)₂, LiN(C₂F₅SO₂)₂, Li[N(CF₃SO₂)(R_{F}SO₂)]ₙ with R_{F} being C₂F₅, C₄F₉, CF₃OCF₂CF₂, LiAsF₆, LiC(CF₃SO₂)₃ and mixtures thereof. More preferably, the ionically conducting salt is LiPF₆.

The ionically conducting salt is preferably dissolved in the organic carbonate-based solvent in a concentration between 0.5 and 5.0 molar, more preferably between 0.8 and 1.5 molar, still more preferably a concentration of 1.0 molar.

Non-limiting examples of suitable organic carbonate-based solvents include unsaturated cyclic carbonates and acyclic carbonates.

Preferred unsaturated cyclic carbonates include cyclic alkylene carbonates, e.g. ethylene carbonate (EC), propylene carbonate (PC), butylene carbonate, fluoroethylene carbonate and fluoropropylene carbonate. A more preferred unsaturated cyclic carbonate is ethylene carbonate.

Preferred acyclic carbonates include dimethylcarbonate (DMC), diethylcarbonate (DEC), ethylmethylcarbonate (EMC), and fluorinated acyclic carbonates such as those represented by the formula: R₁-O-C(O)O-R₂, wherein R₁ and R₂ are independently selected from the group consisting of CH₃, CH₂CH₃, CH₂CH₂CH₃, CH(CH₃)₂, and CH₂Rf where Rf is a C1 to C3 alkyl group substituted with at least one fluorine atom, and further wherein at least one of R₁ or R₂ contains at least one fluorine atom.

Suitable solvents may additionally comprise an ester component selected from the group consisting of propyl propionate (PP), ethyl propionate (EP) and the fluorinated acyclic carboxylic acid esters of formula: R₃-C(O)O-R₄, wherein R₃ is selected from the group consisting of CH₃, CH₂CH₃, CH₂CH₂CH₃, CH(CH₃)₂,CF₃, CF₂H, CFH₂, CF₂R₅, CFHR₃, and CH₂Rf, and R₄ is independently selected from the group consisting of CH₃, CH₂CH₃, CH₂CH₂CH₃, CH(CH₃)₂, and CH₂Rf, where R₅ is a C1 to C3 alkyl group which is optionally substituted with at least one fluorine atom, and R₃ is a C1 to C3 alkyl group substituted with at least one fluorine, and further wherein at least one of R₃ or R₄ contains at least one fluorine and when R₃ is CF₂H, R₄ is not CH.

In a preferred embodiment, the at least one organic carbonate-based solvent is a mixture of at least one acyclic carbonate and at least one unsaturated cyclic carbonate. More preferably, the at least one organic carbonate-based solvent is a mixture of ethylene carbonate and ethylmethylcarbonate.

Preferably, the mixture of at least one acyclic carbonate and at least one unsaturated cyclic carbonate comprises the at least one unsaturated cyclic carbonate and the at least one acyclic carbonate in a ratio from 1:4 to 1:1 by volume, more preferably of from 1:2.5 to 1:1 by volume, still more preferably of 1:1 by volume.

An advantageous combination of ionically conducting salt and organic carbonate-based solvent may for instance be a 1 molar solution of LiPF₆ in EC:EMC 3:7 by volume.

The electrolyte composition of the present invention comprises silica characterised by a median particle size greater than 80 µm. The median particle size is preferably equal to or greater than 85 µm. The median particle size is typically from 85 µm to 300 µm. In a preferred embodiment, the precipitated silica median particle size is from 90 to 250 µm, more preferably of from 90 to 200 µm, still more preferably from 95 to 200 µm.

The median particle size is determined by laser diffraction as described hereafter.

The silica in the electrolyte composition is an amorphous silica. Preferably silica is precipitated silica. By "precipitated silica" it is meant a silica that is typically prepared by precipitation from a solution containing silicate salts (such as sodium silicate), with an acidifying agent (such as sulfuric acid).

Precipitated silica used in the invention may be prepared by implementing the methods described in EP396450A, EP520862A, EP670813A, EP670814A, EP762992A, EP762993A, EP917519A, EP1355856A, WO03/016215A, WO2009/112458A, WO2011/117400A, WO2013/110659A, WO2013/139934A, WO2008/000761A.

A notable, non-limiting example of precipitated silica which could be used in the present invention is for instance Zeosil® 161MP, commercially available from Solvay.

The amount of silica, preferably precipitated silica, in the electrolyte composition of the invention is from 0.1 wt% to 20.0 wt%, relative to the total weight of the electrolyte composition.

The precipitated silica is typically in an amount equal to or greater than 0.2 wt%, even equal to or greater than 0.5 wt%, still equal to or greate than 1.0 wt% relative to the total weight of the electrolyte. The amount of precipitated silica generally does not exceed 20.0 wt%, preferably 15.0 wt%, more preferably 12.0 wt%, relative to the total weight of the electrolyte composition. The amount of silica in the composition, preferably precipitated silica, can conveniently be from 0.1 to 15.0 wt%, from 0.5 to 12.0 wt%, from 1.0 to 10 wt%.

When silica used in the electrolyte of the present invention is precipitated silica, it is characterized by a BET specific surface area of from 100 to 450 m²/g. The precipitated silica typically has a BET specific surface of at least 110 m²/g, in particular of at least 120 m²/g. The BET specific surface generally is at most 300 m²/g, in particular at most 250 m²/g.

The BET specific surface is determined according to the Brunauer-Emmett -Teller method described in The Journal of the American Chemical Society, Vol. 60, page 309, February 1938, and corresponding to the standard NF ISO 5794-1, Appendix E (June 2010).

In general, the precipitated silica has a CTAB specific surface of between 100 and 450 m²/g. The CTAB specific surface is the external surface, which can be determined according to the standard NF ISO 5794-1, Appendix G (June 2010).

The precipitated silica used in the present invention preferably exhibits a pH of between 6.3 and 8.0, more preferably of between 6.3 and 7.6.

The pH is measured according to a modification of standard ISO 787/9 (pH of a 5% suspension in water) as follows: 5 grams of precipitated silica are weighed to within about 0.01 gram into a 200 mL beaker. 95 mL of water, measured from a graduated measuring cylinder, are subsequently added to the precipitated silica powder. The suspension thus obtained is vigorously stirred (magnetic stirring) for 10 minutes. The pH measurement is then carried out.

According to a particular embodiment, the precipitated silica used in the present invention has an aluminium content, calculated as aluminium metal, of less than 0.2 wt%, generally of less than 0.1 wt%, preferably of less than 0.05 wt% with respect to the weight of the precipitated silica. The aluminium content may be between 0.2 wt% and 0.01 wt%.

The quantity of aluminium may be measured by any suitable method, for example ICP-AES ("Inductively Coupled Plasma - Atomic Emission Spectroscopy") after the addition of the silica in water in the presence of hydrofluoric acid.

In addition to the components identified above, the electrolyte composition can conveniently contain at least one additive selected from the group consisting of:
- film forming carbonates, such as vinylene carbonate (VC), vinyl ethylene carbonate (VEC), fluoroethylene carbonate (FEC), difluoroethylene carbonate F2EC, allyl ethyl carbonate;
- conductive coatings, such as poly-thiophene, poly(3,4-ethylenedioxythiophene (PEDOT);
- additional lithium salts, such as Li bis(trifluorosulphonyl)imide, lithium oxalyldifluoroborate;
- catalyst inhibitors, such as SO₂, CS₂, cyclic alkyl sulfites;
- solid electrolyte interphase (SEI) stabilizers, such as B₂O₃, organic borates, boroxines;
- HF scavenger, such as tris(trimethylsilyl)borate (TMSB), tris(trimethylsilyl) phosphite (TMSP);
- gas generation suppressants, such as 1,3-propane sultone (PS), prop-1-ene-1,3-sultone (PES);
- surfactants, such as perfluoro-octyl-ethylene carbonate (PFO-EC);
- passivizing agents, such as hexafluoroisopropanol, succinic anhydride;
- ionic liquids;
- redox shuttles, and
- fire retardants.

The electrolyte composition may be prepared using any conventional means, such as by adding precipitated silica under stirring to the remaining components of the composition.

A second object of the present invention is an electronic device comprising the electrolyte composition as defined above. The electronic device may be for instance a primary or secondary battery, a supercapacitor, an electro-chromic display or a solar cell.

All definitions and preferences defined above for the electrolyte composition and its components equally apply to the electronic device comprising the electrolyte composition.

The electronic device may be an alkali metal battery. The expression "alkali metal battery" is used herein to refer to lithium metal, lithium-ion and sodium-ion primary or secondary batteries.

The alkali metal battery may be of any type, such as cylindrical, button, prismatic, or in the form of a pouch.

The alkali metal battery comprises at least one positive electrode, at least one negative electrode and the electrolyte composition of the invention disposed between the positive and the negative electrodes.

The electrolyte composition of the invention finds advantageous use in the preparation of pouch batteries.

Accordingly, an additional object of the invention is a pouch battery comprising the electrolyte composition of the invention. The pouch battery typically comprises at least one positive electrode, at least one negative electrode and at least one separator layer positioned between said negative and said positive electrodes. The inventive electrolyte composition is provided on at least one surface of said separator layer.

The inventive electrolyte composition is characterised by a viscosity which makes it suitable for being directly injected into a preformed pouch, said pouch comprising at least one positive electrode, at least one negative electrode and at least one separator layer positioned between said negative and said positive electrodes. The inventive composition thus allows implementing an efficient process for preparing the battery assembly.

The invention therefore is also directed to a process for the manufacture of an alkali battery, preferably a lithium-ion battery, in particular a pouch battery, said process comprising: providing an assembly containing at least one positive electrode, at least one negative electrode and at least one separator layer positioned between the negative and the positive electrode, and injecting the inventive electrolyte composition in the assembly so that an electrolyte layer forms on at least one surface of the separator layer, and sealing the assembly. Preferably an electrolyte layer is formed on each surface of the separator layer.

The separator layer may be selected from the group consisting of porous non-woven materials, ceramic coated materials and polyolefin materials.

The expression "non-woven" is used herein to refer to common fabric-like materials made from short fibers and long fibers, bonded together by chemical, mechanical, heat or solvent treatment. Non-woven materials are porous materials. The nature of the fiber composing the non-woven layer is not limiting. Suitable non-woven materials for use in the composite electrolyte of the invention may be made of inorganic or organic fibers. Among inorganic fibers mention may be made of glass fibers. Among organic fibers mention may be made of cellulose or rayon fibers, carbon fibers, polyolefins fibers such as polyethylene or polypropylene fibers, poly(paraphenylene terephthalamide) fibers, polyethylene terephthalate fibers, polyimide fibers or any other polymer that can be fabricated in a fiber form.

Typical non-woven materials have a thickness comprised between 5 and 100 µm, preferably between 10 and 80 µm, more preferably between 10 and 50 µm.

Non-limiting examples of suitable non-woven material are those supplied by Nippon Kodoshi Corp. (Japan) under trade name TF4035.

The expression "ceramic coated material" refers to porous composite materials comprising either ceramic particles as fillers, e. g. in woven, nonwoven or porous polymer matrices, as well as ceramic particles supported by a polymer membrane substrate. Non-limiting examples of suitable ceramic coated materials are those supplied by W-scope (Japan). They typically have a thicknesses in the range of 10 to 30 µm.

In a preferred ambodiment of the inventive battery, the separator layer consists of a ceramic coated material.

The expression "polyolefin material" refers to polyolefin-based porous membrane may be obtained from a polyolefin-based polymer, for example, polyethylene such as high-density polyethylene, linear low-density polyethylene, low-density polyethylene and ultra-high molecular weight polyethylene, polypropylene, polybutylene, polypentene or a mixture thereof.

The inventive process may be applied both to the manufacture of a battery comprising one cell (monocell) as well as more than one cell in a so-called "stack". When applied to the manufacture of a battery comprising a stack of cells, a suitable number of separator layers are present between each positive and each negative electrodes in the stack.

In a preferred aspect, the present invention concerns lithium- or sodium-ion batteries (primary or secondary), preferably lithium-ion batteries, more preferably lithium-ion secondary batteries.

Suitable compounds for forming a positive electrode for a lithium-ion secondary battery comprise, for instance, a composite metal complex of formula LiₐAₓB_{y}C_{z}Q₂ (0.8<a<1.5, x+y+z=1, 0≤x,y,z≤1) wherein A, B, C is at least one metal selected from transition metals such as Co, Ni, Fe, Mn, Cr and V and Q is a complexed element such as O or S. Preferred examples thereof may include LiCoO₂, LiNi_{0.6}Co_{0.2}Mn_{0.2}O₂. Suitable compounds may be those of formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, compound EA1 is a phosphate-based electro-active material of formula Li(FeₓMn₁₋ₓ)PO₄ wherein 0≤x≤1, wherein x is preferably 1 (that is to say, lithium iron phosphate of formula LiFePO₄).

Suitable compounds for forming a negative electrode for a lithium-ion secondary battery preferably comprise:
- graphitic carbons able to intercalate lithium, typically existing in forms such as powders, flakes, fibers or spheres (for example, mesocarbon microbeads) hosting lithium;
- lithium metal;
- lithium alloy compositions, including notably those described in US 6203944 and/or in WO 00/03444;
- lithium titanates, generally represented by formula Li₄Ti₅O₁₂;
- lithium-silicon alloys, generally known as lithium silicides with high Li/Si ratios, in particular lithium silicides of formula Li_{4.4}Si;
- lithium-germanium alloys, including crystalline phases of formula Li_{4.4}Ge.

The use of the electrolyte composition of the present invention significantly improves the safety of the battery by increasing the resistance of the inventive batteries during nail penetration tests, which are designed to simulate internal shorts in the battery.

The inventive composition at the same time provides batteries having good initial discharge capacity and good discharge capacity retention. The temperature at which the inventive battery undergoes fatal destructive failure is comparable to that of a reference battery.

The invention will be now described with reference to the following examples, whose purpose is merely illustrative and not intended to limit scope of the invention.

Should the disclosure of any patents, patent applications, and publications which are incorporated herein by reference conflict with the description of the present application to the extent that it may render a term unclear, the present description shall take precedence.

### EXAMPLES

### Particle size determination

The median particle size was determined by laser diffraction using a LS 13 320 (Beckman Coulter, USA) particle sizer on a suspension in water. The analysis protocol includes a first full deagglomeration of the precipitated silica sample to be carried out before the laser diffraction determination The full deagglomeration of the precipitated silica sample was carried out until median particle size variation between two consecutive analyses is inferior to 5%:
Hydro 2000G sample dispersion unit
Stirring conditions : 500 rpm
   - Pump conditions : 1250 rpm
   - Ultrasonic probe : 100%
   - Measurement parameters :
   - Obscuration range : 8-15%
   - Background measurement duration : 10 s
   - Measurement duration : 10 s
   - Delay between measurements : 1 s.

Time to reach a stable median particle size with such protocol is typically around one hundred seconds.

### RAW MATERIALS

**Silica:** Zeosil® 161 MP (Z161) precipitated silica from Solvay having BET surface area S_{BET} = 160 m²/g, median particle size 107 µm (measured by laser diffraction), Al content less than 0.15 wt%
**Ceramic coated separator:** (CCS) SC1222-812401 manufactured by W-scope (Japan) and having thickness of 16 µm a porosity of about 40% to 50%.
**NCM622:** LiNi_{0.6}Co_{0.2}Mn_{0.2}O₂, manufactured by L&F, South Korea **Super-P®:** carbon black, manufactured by TIMCAL, Belgium
**Solef®5130:** PVDF binder, manufactured by Solvay Specialty Polymers **BTR918-2:** Natural graphite manufactured by BTR, China
**SBR/CMC:** styrene-butadiene rubber/carboxymethyl cellulose binder

### General Procedure for the preparation of the electrolyte formulation

Reference electrolyte: The reference electrolyte (0 wt% precipitated silica) was prepared by simple mixing using a magnetic stirrer. All components were added to one bottle and were mixed until providing a transparent solution. Firstly, lithium hexafluorophosphate (LiPF₆) was dissolved in the solvent. The solvent was composed of ethylene carbonate (EC) and ethyl methyl carbonate (EMC) in a 3:7 v/v ratio and 2 wt% vinylene carbonate (VC), then 0.5 wt% 1,3-propane sultone (PS) was added as an additive.

Inventive electrolyte composition: All required components were added to one bottle and were mixed by hand shaking until obtaining a uniform dispersion. The precipitated silica was dried and added to the liquid electrolyte in an inert atmosphere, so as to avoid traces of water in the final product. The bottle was sealed by Parafilm® M (Bemis).

The compositions of the electrolytes are summarized in Table 1.

**Table 1**

| | Salt | Solvent | Additive (wt%) | Silica (wt%) | Viscosity (mPa.s) @ 25°C/1s⁻¹ |
|---|---|---|---|---|---|
| Ref. electrolyte | 1 M LiPF₆ | EC/EMC = 3/7 | 2% VC, 0.5% PS | 0% | - |
| Electrolyte A | 1 M LiPF₆ | EC/EMC = 3/7 | 2% VC, 0.5% PS | 2% Z161 | 35 |
| Electrolyte B | 1 M LiPF₆ | EC/EMC = 3/7 | 2% VC, 0.5% PS | 4% Z161 | 138 |

Viscosity of the electrolyte compositions was measured using a Malvern Kinexus ultra+ rheometer (KNX2310 with CP1/60 SR2752 spindle) at 25°C under a shear rate of 1 s⁻¹.

### Example 1 and Comparative Example 1

Electrolyte compositions A and B as described in Table 1 were prepared as described in the General Procedure.

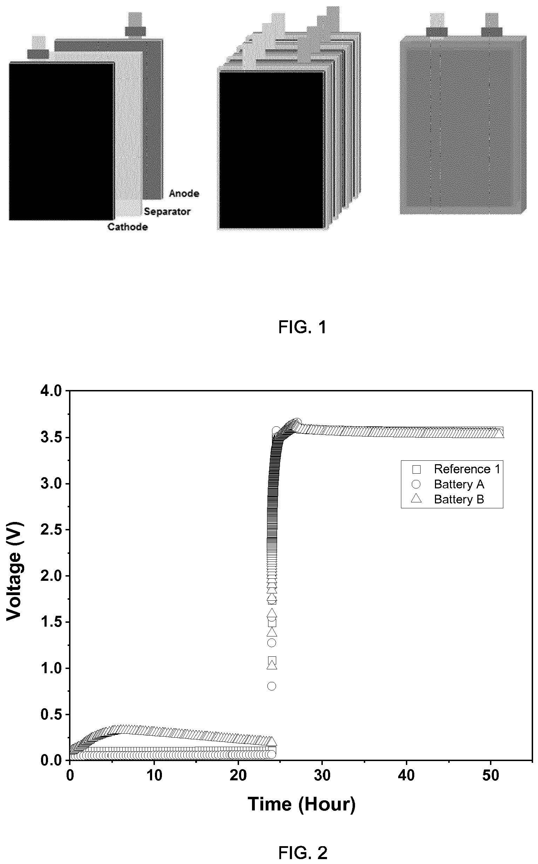

An assembly for a pouch cell, comprising a negative electrode, a positive electrode and a separator layer comprising ceramic coated material disposed between the positive and the negative electrode, configured as schematized in FIG. 1, was prepared.

Negative electrode formulation: BTR918-2 + Super-P® + SBR/CMC (97:1:1:1 by weight); electrode loading: 6.8 mg/cm².

Positive electrode formulation: NCM622 + Super-P® + 8% Solef® 5130 (95:3:2 by weight); electrode loading: 13.3 mg/cm², theoretical capacity: 172 mAh/g.

Electrolyte A or B were injected in the pouch cell using a syringe and sealed under vacuum.

A reference pouch-cell lithium-ion battery having the same electrodes configuration but using the reference liquid electrolyte defined in Table 1 was also prepared (Reference 1).

Battery A and B and Reference 1 were subjected to a formation step to form a solid electrolyte interphase between the electrolyte and the surface of the negative electrode. They were charged at a C-rate of C/10 for 3 hours at 25°C.

After formation the batteries were fully charged to 4.2V at C/5 for 100% state of charge.

The charge-discharge behavior of the batteries was tested between 3.0 V and 4.2 V of cut-off voltage range at room temperature. Current density during charge and discharge steps was C/2.

Battery A and B showed normal voltage profile without significant decrease of open circuit voltage after 0.1C charge for 3 hours.

The initial discharge capacity of Reference 1 was 1231 mAh, the one of Battery A and B was 1199 mAh and 1126 mAh, respectively. However, Battery B showed higher than 80% of discharge retention at 200^{th} cycle.

Battery A and B and Reference 1 were then subjected to a thermal exposure test in the following conditions: heating up to 200°C with a heating rate of 5°C/min, hold for 60 min at 200°C in an explosion proof chamber.

The results showed comparable or better performance for the battery according to the invention (A and B) than the reference battery (Ref. 1).

Battery A and B and Reference 1 were also subjected to a nail penetration test performed according to DOE SAND 2005-3123 Battery standards procedures using a nail speed of 8 cm/s and a bar diameter of 3 mm.

Battery Reference 1 showed flame and fire during nail penetration test and hazard level was rated as 5 in a scale from 0 (no effect of nail penetration, no loss of battery functionality) to 7 (explosion, disintegration of the cell). Battery A showed spark but no fire during the test and hazard level was rated 4. Battery B showed no smoke and no leakage during the test and hazard level was rated as 2.

Nail penetration performance was significantly improved for the batteries containing the electrolyte composition of the invention.

## Claims

1. An electrolyte composition comprising:
- at least one ionically conducting salt,
- at least one organic carbonate-based solvent, and
- silica,
**characterised in that** the composition has a viscosity, measured at 25°C under a shear rate of 1 s⁻¹, in the range from 0.1 to less than 1000 mPa.s.

2. The electrolyte composition according to claim 1 which has a viscosity, measured at 25°C under a shear rate of 1 s⁻¹, in the range of from 0.1 to 500 mPa.s.

3. The electrolyte composition according to any one of the preceding claims wherein the silica has a median particle size in the range from 85 µm to 300 µm.

4. The electrolyte composition according to any one of the preceding claims wherein silica is present in an amount by weight of from 0.1% to 20.0% relative to the total weight of the electrolyte.

5. The electrolyte composition according to any one of the preceding claims wherein silica has an aluminium content, calculated as aluminium metal, of less than 0.2 wt%.

6. The electrolyte composition according to any one of the preceding claims wherein silica is precipitated silica.

7. The electrolyte composition according to any one of the preceding claims wherein the at least one ionically conducting salt is selected from the group consisting of LiPF₆, LiBF₄, LiClO₄, lithium bis(oxalato)borate ("LiBOB"), LiN(CF₃SO₂)₂, LiN(C₂F₅SO₂)₂, Li[N(CF₃SO₂)(R_{F}SO₂)]ₙ with R_{F} being C₂F₅, C₄F₉, CF₃OCF₂CF₂, LiAsF₆, LiC(CF₃SO₂)₃ and mixtures thereof.

8. The electrolyte composition according to any one of the preceding claims wherein the at least one organic carbonate-based solvent is selected from the group consisting of unsaturated cyclic carbonates, preferably selected from the group consisting of ethylene carbonate, propylene carbonate, butylene carbonate, fluoroethylene carbonate and fluoropropylene carbonate, and acyclic carbonates, preferably selected from the group consisting of dimethylcarbonate, diethylcarbonate, ethylmethylcarbonate, and fluorinated acyclic carbonates of formula: R₁-O-C(O)O-R₂, wherein R₁ and R₂ are independently selected from the group consisting of CH₃, CH₂CH₃, CH₂CH₂CH₃, CH(CH₃)₂, and CH₂Rf where Rf is a C1 to C3 alkyl group substituted with at least one fluorine atom, and further wherein at least one of R₁ or R₂ contains at least one fluorine atom.

9. An electronic device comprising the electrolyte composition according to anyone of claims 1 to 8.

10. An electronic device according to claim 9 which is a battery.

11. A battery according to claim 10 which comprises at least one positive electrode, at least one negative electrode, at least one separator layer positioned between said negative and said positive electrodes **characterised in that** the electrolyte composition of anyone of claims 1 to 7 is provided on at least one surface of said separator layer.

12. The battery of claim 11 wherein the separator layer is made of a material selected from the non-woven porous materials, the ceramic coated materials or the polyolefin materials.

13. A process for the manufacture of the battery of claim 11 or 12 which comprises the steps of: providing an assembly comprising at least one positive electrode, at least one negative electrode and at least one separator layer positioned between said negative and said positive electrode; injecting the electrolyte composition of any one of claims 1 to 8 in the assembly; and sealing the assembly.
